Europäisches Patentamt

European Patent Office

Office européen des brevets

(19)

(11) Publication number: **0 026 681**
**B1**

(12) ## EUROPEAN PATENT SPECIFICATION

(45) Date of publication of patent specification: 28.03.84

(21) Application number: 80401151.8

(22) Date of filing: 01.08.80

(51) Int. Cl.³: **F 16 D 3/00, F 16 D 3/18, F 16 D 3/50, G 01 P 13/00**

(54) Drive shaft coupling.

(30) Priority: 27.09.79 US 79613

(43) Date of publication of application:
08.04.81 Bulletin 81/14

(45) Publication of the grant of the patent:
28.03.84 Bulletin 84/13

(84) Designated Contracting States:
DE FR GB

(56) References cited:
CH - A - 392 414
DE - A - 1 798 329
FR - A - 1 326 805
FR - A - 2 204 255
US - A - 2 422 973
US - A - 3 402 572
US - A - 4 133 188

(73) Proprietor: THE BENDIX CORPORATION
Executive Offices Bendix Center
Southfield Michigan 48037 (US)

(72) Inventor: Coman, William Edwin
RD 1
Newport, New York 13416 (US)
Inventor: Tepolt, Florian Edward
9895 Route 49
Utica New York 13502 (US)

(74) Representative: Maguet, André et al,
Service Brevets Bendix 44, Rue François 1er
F-75008 Paris (FR)

Courier Press, Leamington Spa, England.

Drive shaft coupling

The present invention relates to a drive shaft apparatus comprising drive means having a driving end and a driven end, and torque transmitting means coupling the driving and driven ends.

Drive shaft apparatus of the type having driving and driven member coupled by a flexible diaphragm arrangement for correcting misalignment between the members is well known in the art. A flexible coupling of the typre referred to is disclosed in U.S. Patent 3,124,942.

In critical applications such as for aircraft drives or the like, it is important that a redundant coupling be provided in the event of a malfunction or failure of the primary coupling, i.e., the flexible coupling. Further, since the redundant coupling is usually designed for only a limited life, a fail-safe indication of the primary coupling failure is required.

U.S. Patent 4,133,188 discloses a drive shaft apparatus according to the precharacterizing part of claim 7. The drive shaft coupling according to this type does however not disclose a fail-safe indication of the coupling failure.

The present invention further comprises the features of the characterizing part of claim 7.

The manner of carrying out the invention is disclosed in detail below with reference to the drawings which illustrate several embodiments of this invention, in which:

FIGURE 1 is a diagrammatic sectional view showing a drive shaft apparatus including a primary coupling and a redundant coupling according to the invention;

FIGURE 2 is a diagrammatic sectioned view showing the structural relationship between spline members included in the redundant coupling shown in FIGURE 1 when the redundant coupling is inoperative;

FIGURE 3 is a block diagram-electrical schematic showing an embodiment of circuit means arranged with the drive shaft apparatus shown in FIGURE 1 for detecting failure of the primary coupling, whereupon the redundant coupling is rendered operative; and

FIGURE 4 is a block diagram-electrical schematic showing another embodiment of circuit means for detecting failure of the primary coupling.

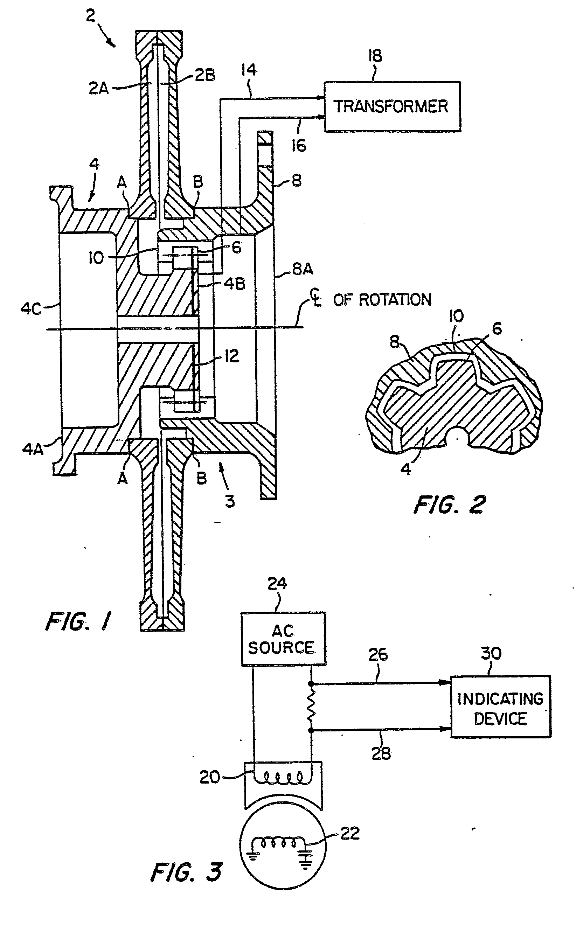

FIGURE 1 of the drawing shows a flexible torque transmitting coupling designated generally by the numerals 2 and a spline coupling designated generally by the numeral 3. Spline coupling 3 includes a spline adapter 4 having an external spline 6 arranged with spline flange 8 having an internal spline 10. Spline adapter 4 and spline flange 8 are secured to opposite sides of the flexible coupling 2 as by welding or the like at points A and B in the Figure.

In this connection, reference is made to FIGURE 2 of the drawings wherein external spline 6 and internal spline 10 are arranged during the aforenoted welding so that there is clearance therebetween. This is accomplished by placing shims of equal thickness between the opposite sides of an external spline tooth and the corresponding sides of a mating internal spline tooth and removing the shims after the welding has been completed. The spline teeth do not engage until the spline coupling becomes operative as will be hereinafter explained.

The structure of the spline adapter 4 is of importance to the invention. Hence, the spline adapter is formed as two separate members as shown in FIGURE 1. One of the members, designated as 4A, is the primary load carrying member, while the other member, designated as 4B, is a thin section fastened to member 4A by screws or rivets or the like (not shown) and insulated therefrom by a suitable insulating member 12.

Except for the insulating member 12, the spline adapter 4 would close an electrical circuit through the flexible coupling 2 and the spline flange 8. With the arrangement shown, the circuit is closed only upon a failure of the flexible coupling 2, whereupon splines 6 and 10 engage to render the spline coupling operative.

The spline adapter 4 is coupled at end 4C thereof by suitable means such as welding or the like to a drive shaft (not shown). The spline flange 8 is coupled at end 8A thereof by like means to another shaft (not shown) which can be the driven shaft relative to the drive shaft, or the arrangement obviously can be reversed. In any event, during the transmission of torque the shafts are in a slight degree of misalignment relative to each other.

The flexible coupling 2, as described in the aforenoted U.S. Patent 3,124,942, includes flexible diaphragm elements 2A and 2B forming a flexible torque transmitting coupling for the driving and driven shafts to compensate for the aforenoted misalignment.

The construction and operation of the flexible coupling will not be described in further detail herein, except to say that the flexible coupling provides primary torque transmitting means between the driving and driven shafts. As long as the flexible coupling 2 is operative, the spline coupling 3, which is in effect a redundant torque transmitting means or coupling, is inoperative.

Upon the failure of the flexbie coupling 2, i.e., its inability to transmit torque from the driving to the driven shafts, the redundant torque transmitting coupling 3 is rendered operative. To this end, the spline adapter 4 rotates relative to the spline flange 8 (a few degrees) until the external and internal splines engage to accomplish the torque transmitting function. Under these conditions, portion 4B of the spline adapter 4 completes an electrical circuit through the spline flange 8. This feature is utilized to detect and indicate the failure of the flexible coupling 2 as will next be described.

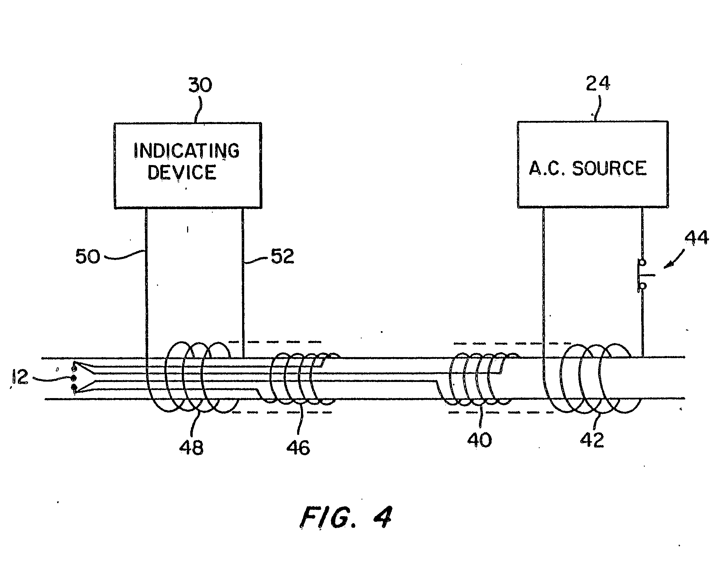

As shown in FIGURE 1, a conductor 14 is connected to the rotating spline adapter member 4B, while a conductor 16 is connected to the stationary spline flange 8. Conductors 14 and 16 provide an electrical connection across a secondary winding of a transformer designated generally by the numeral 18. Transformer 18 is an air core transformer and will be further described with reference to FIGURES 3 and 4 of the drawings.

With reference first to FIGURE 3, transformer 18 includes a primary or stationary winding 20 which is excited by a suitable AC source 24 which induces a voltage in a secondary winding 22 of transformer 18, which secondary winding is arranged to rotate with the drive shaft.

Upon the external spline 6 and the internal spline 10 making contact through the rotation of the spline adapter 4, the electrical circuit including conductors 14 and 16 connected across the secondary winding 22 is thereby closed and thus effective for short circuiting secondary winding 22. This causes a sharp reduction in the impedance of the primary winding 20 which is sensed at output conductors 26 and 28 and energizes an indicating device 30 for indicating a failure of the flexible coupling 2 and the ensuing operation of the redundant coupling 3. The indicating device 30 may be located in an aircraft cockpit or the like to provide a visual or audible indication or alarm, as the case may be.

It will be understood that the described failure detection and indication is essential since the redundant spline coupling is usually designed to only temporarily carry the load being transmitted. It is imperative, therefore, that in aircraft applications, for example, the pilot receives immediate warning that the primary coupling has failed so that appropriate action may be taken.

Another more reliable embodiment of the failure detection and indication feature of the invention is illustrated in FIGURE 4. In this embodiment, as in the embodiment shown in FIGURE 3, transformer 18 includes a secondary winding designated by the numeral 40 which is arranged to rotate with the drive shaft and a stationary primary winding designated by the numeral 42, the secondary winding 40 being inductively coupled to the primary winding 42. Stationary primary winding 42 is connected to AC source 24 through a "push-to-test" switch 44. In addition, in this embodiment, transformer 18 includes a second primary winding 46 which is arranged to rotate with the drive shaft and a second secondary winding 48 which is arranged to be stationary, the second primary winding 46 being inductively coupled to the second secondary winding 48. The secondary winding 40 and the second primary winding 46 are in a parallel arrangement and the junction points of the windings 40 and 46 is located as close as possible to the insulating member 12 so that any break in the conductors connecting said windings together with trigger a failure indication. The conductors 14 and 16 are respectively connected to these junction points.

The primary winding 42 is energized by the AC source 24 and a voltage is induced in the secondary winding 40 as described with reference to the embodiment of the invention shown in FIGURE 3. This voltage energizes the second primary winding 46 due to the parallel arrangement of the windings. This, in turn, induces a signal in the second secondary winding 48 which is sensed at output conductors 50 and 52.

In the event of a failure of the primary coupling 2, whereby the redundant coupling 3 is rendered operative as heretofore described, the electrical circuit including conductors 14 and 16 connected to the junction points is closed and the rotating windings 40 and 46 are shortcircuited so that no signal is provided at output conductors 50 and 52.

The absence of a signal at the output conductors 50 and 52 causes failure indicator 30 to provide a failure indication. In this manner a failure in the primary coupling or a failure in the AC source 24, the transformer windings or the interconnecting conductors of windings 40 and 46, triggers a failure indication. The push-to-test switch 44 is used to momentarily interrupt the connection between the AC source 24 and the fixed primary winding 42 to check the operation of the entire failure detection and indication system.

## Claims

1. Drive shaft apparatus including drive means having a driving end (4C) and a driven end (8A), torque transmitting means (2) coupling the driving and driven ends (4C, 8A); and redundant torque transmitting means (3) coupled to the primary torque transmitting means (2) and rendered operative upon a failure of the primary torque transmitting means (2) for coupling the driving end (4C) with the driven end (8A); the redundant torque transmitting means (3) including a first spline member (4) connected to the primary torque transmitting means (2) and coupled to one of the driving and driven ends (4C, 8A); and a second spline member (8) connected to the primary torque transmitting means (2) and coupled to the other of the driving and driven ends (4C, 8A); the first and second spline members (4, 8) being in mating relation but with the respective splines (6, 10) thereof disengaged so that the redundant torque transmitting means (3) is inoperative when the primary torque transmitting means (2) is operative; one of the first and second spline members (4, 8) being displaced upon a failure of the primary torque transmitting means (2) so that the respective splines (6, 10) of the first and second spline members (4, 8) are engaged and the redundant torque transmitting means (3) is rendered operative characterized in that said apparatus further comprises: a failure detector including, on the one hand, a transformer circuit (18) electrically associated with the redundant torque transmitting means (3) and having at least one stationary winding (20), means (24) for energizing said stationary winding (20), and at least one rotating winding (22) inductively coupled to the stationary winding (20) and rotating with said drive means, the redundant torque transmitting means (3), when rendered operative upon failure of the primary torque transmitting means (2), affecting the transformer circuit (18) for short circuiting the rotating winding (22), and, on the other hand, means (30) connected to the transformer circuit (18) for sensing the short circuit which is indicative of a failure of the primary torque transmitting means (2).

2. Drive shaft apparatus as claimed in claim 1, characterized in that the first spline member (4) has a first main torque transmitting section (4A) and a second relatively thin section (4B) secured to said first section; in that an insulating member (12) separates said first and second sections (4A, 4B) so that an electrical circuit is open through the first and second spline members (4, 8) when the redundant torque transmitting means (3) is inoperative, said electrical circuit being closed through the engagement of the respective splines (6, 10) of the first and second spline members (4, 8) when the redundant torque transmitting means (3) is operative upon a failure of the primary torque transmitting means (2).

3. Drive shaft apparatus as claimed in claims 1 and 2, characterized in that the closing of the electrical circuit through the engagement of the respective splines (6, 10) of the first and second spline members (4, 8) short circuits the rotating winding (22) whereby reducing the impedance of the stationary winding (20); and in that the means (30) for sensing the short circuit which is indicative of a failure of the primary torque transmitting means (2) senses the reduced impedance of the stationary winding (20).

4. Drive shaft apparatus as claimed in claims 1 and 2, characterized in that there are provided first and second stationary windings (42, 48) and first and second rotating windings (40, 46); the first rotating winding (40) is inductively coupled to the first stationary winding (42) and the second rotating winding (46) is inductively coupled to the second stationary windings (48); the first and second rotating windings (40, 46) are connected in parallel arrangement; the first stationary winding (42) is energized by the energizing means (24) whereupon a signal is induced in the first rotating winding (40) and the second rotating winding (46) is energized by the signal induced in the first rotating winding (40), whereupon a signal is induced in the second stationary winding (48); in that the closing of the electrical circuit through the engagement of the respective splines (6, 10) of the first and second spline members (6, 8) short circuits the first and second rotating windings (40, 46) whereby resulting in the absence of the signal induced in the second stationary winding (48) so that the means (30) for sensing the short circuit which is indicative of a failure of the primary torque transmitting means (2) senses the absence of said signal.

5. Drive shaft apparatus as claimed in claim 4, characterized in that there is provided switching means (44) connecting the energizing means (24) to the first stationary winding (42), said switching means (44) being manually operable to disconnect the first stationary winding (42) from the energizing means (24) for testing the transformer circuit (18).

6. Drive shaft apparatus as claimed in claim 3, characterized in that the means (30) connected to the transformer circuit (18) for sensing the short circuiting includes an indicating device (30) connected intermediate the stationary winding (20) and the energizing means (24) and responsive to the reduced impedance of the stationary winding (20) for providing a failure indication.

7. Drive shaft apparatus as claimed in claim 4, characterized in that the means (30) connected to the transformer circuit (18) for sensing the short circuiting includes an indicating device (30) connected across the second stationary winding (48) for sensing the absence of the signal normally induced therein to provide a failure indication.

**Revendications**

1. Mécanisme d'arbre de transmission comprenant des moyens de transmission ayant une extrémité menante (4C) et une extrémité menée (8A), des moyens (2) de transmission de couple accouplant entre elles les extrémités menante et menée (4C, 8A); et des moyens de transmission de couple redondants (3) accouplés aux moyens de transmission de couple primaires (2) et rendus opérants à la suite d'une défaillance des moyens de transmission de couple primaires (2) pour accoupler l'extrémité menante (4C) à l'extrémité menée (8A); les moyens de transmission de couple redondants (3) comprenant un premier organe cannelé (4) raccordé aux moyens de transmission de couple primaires (2) et accouplé à l'une ou l'autre des extrémités menante et menée (4C, 8A); et un second organe cannelé (8) raccordé aux moyens de transmission de couple primaires (2) et accouplé à l'autre des extrémités menante et menée (4C, 8A); les premier et second organes cannelés (4, 8) étant positionnés dans une disposition accouplée mais avec leurs cannelures respectives (6, 10) écartées les unes des autres de sorte que les moyens de transmission de couple redondants (3) sont inopérants lorsque les moyens de transmission de couple primaires (2) fonctionnent; l'un des premier et second organes cannelés (4, 8) étant déplacé à la suite d'une défaillance des moyens de transmission primaires (2) de sorte que les cannelures respectives (6, 10) des premier et second organes cannelés (4, 8) viennent alors en appui les unes contre les autres et que les moyens de transmission de couple redondants (3) sont rendus opérants, caractérisé en ce que ledit mécanisme comprend, en outre, un détecteur de défaillance qui comprend, d'une part, un circuit transformateur (18) électriquement associé aux moyens de transmission de couple redondants (3) et ayant au moins en enroulement fixe (20), des moyens (24) pour exciter l'enroulement fixe (20) et au moins un enroulement tournant (22) couplé par induction à l'enroulement fixe (20) et tournant avec lesdits moyens de transmission, les moyens de transmission de couple redondants (3), lorsqu'ils sont rendus opérants à la suite de la défaillance des moyens de transmission de couple primaires (2) agissant sur le circuit de transformateur de manière à court-circuiter l'enroulement tournant (22) et, d'autre part, des moyens (30) connectés au circuit transformateur (18) pour détecter le court-circuit qui est indicatif d'une défaillance des moyens de transmission de couple primaires (2).

2. Mécanisme d'arbre de transmission tel que revendiqué dans la revendication 1, caractérisé en ce que le premier organe cannelé (4) comporte une première partie de transmission de couple principale (4A) et une seconde partie relativement mince (4B) fixée à ladite première partie; en ce qu'un organe isolant (12) sépare lesdites première et seconde parties (4A, 4B) de sorte qu'un circuit électrique comprenant les premier et second organes cannelés (4, 8) est ouvert lorsque les moyens de transmission de couple redondants (3) sont inopérants, ledit circuit électrique étant fermé par la venue en appui les unes contre les autres des cannelures respectives (6, 10) des premier et second organes cannelés (4, 8) lorsque les moyens de transmission de couple redondants (3) sont opérants à la suite d'une défaillance des moyens de transmission de couple primaires (2).

3. Mécanisme d'arbre de transmission tel que revendiqué dans les revendications 1 et 2, caractérisé en ce que la fermeture du circuit électrique par suite de la venue en appui les unes contre les autres des cannelures respectives (6, 10) des premier et second organes cannelés (4, 8) court-circuite l'enroulement tournant (22) réduisant ainsi l'impédance de l'enroulement fixe (20); et en ce que les moyens (30) servant à détecter le court-circuit qui est indicatif d'une défaillance des moyens de transmission de couple primaires (2) détectent l'impédance réduite de l'enroulement fixe (20).

4. Mécanisme d'arbre de transmission tel que revendiqué dans les revendications 1 et 2, caractérisé en ce qu'il est prévu des premier et second enroulements fixes (42, 48) et des premier et second enroulements tournants (40, 46); le premier enroulement tournant (40) est couplé par induction au premier enroulement fixe (42) et le second enroulement tournant (46) est couplé par induction au second enroulement fixe (48); les premier et second enroulements tournants (40, 46) sont connectés dans un montage en parallèle; le premier enroulement fixe (42) est excité par les moyens d'excitation (24) à la suite de quoi un signal est induit dans le premier enroulement tournant (40) et le second enroulement tournant (46) est excité par le signal induit dans le premier enroulement tournant (40) à la suite de quoi un signal est induit dans le second enroulement fixe (48); et en ce que la fermeture du circuit électrique par la venue en appui les unes contre les autres des cannelures respectives (6, 10) des premier et second organes cannelés (6, 8) court-circuite les premier et second enroulements tournants (40, 46), ce qui provoque l'absence du signal induit dans le second enroulement fixe (48) de sorte que les moyens (30) servant à détecter le court-circuit qui est indicatif d'une défaillance des moyens de transmission de couple primaires (2) détectent l'absence dudit signal.

5. Mécanisme d'arbre de transmission tel que revendiqué dans la revendication 4, caractérisé en ce qu'il est prévu des moyens interrupteurs (44) connectant les moyens d'excitation (24) au premier enroulement fixe (42), lesdits moyens interrupteurs (44) étant actionnables pour déconnector le premier enroulement fixe (42) des moyens d'excitation (24) afin d'essayer le circuit transformateur (18).

6. Mécanisme d'arbre de transmission tel que revendiqué dans la revendication 3, caractérisé en ce que les moyens (30) connectés au circuit transformateur (18) pour détecter la mise en court-circuit comprennent un dispositif indicateur (30) connecté entre l'enroulement fixe (20) et les moyens d'excitation (24) et fonctionnant en répose à l'impédance réduite de l'enroulement fixe (20) pour fournir une indication de défaillance.

7. Mécanisme d'arbre de transmission tel que revendiqué dans la revendication 4, caractérisé en ce que les moyens (30) connectés au circuit transformateur (18) pour détecter la mise en court-circuit comprennent un dispositif indicateur (30) connecté aux bornes de l'enroulement secondaire (48) pour détecter l'absence du signal qui y est normalement induit afin de produire une indication de défaillance.

**Patentansprüche**

1. Antriebswellenkupplung mit Antriebsmitteln die ein treibendes Ende (4C) und ein getriebenes Ende (8A) aufweisen, drehmomentübertragenden Mitteln (2), die das treibende oder getriebene Ende (4C, 8A) kuppeln, und redundanten drehmomentübertragenden Mitteln (3) die mit den primären drehmomentübertragenden Mitteln (2) gekoppelt sind und bei Ausfall der primären drehmomentübertragenden Mitteln (2) in Funktion treten, um das treibende Ende (4C) mit dem getriebenen Ende (8A) zu kuppeln, wobei die redundanten drehmomentübertragenden Mittel (3) ein erstes Keilwellenglied (4) und ein zweites Keilwellenglied (8) aufweisen, von denen das erste Keilwellenglied (4) mit den primären drehmomentübertragenden Mitteln (2) verbunden und mit dem treibenden oder getriebenen Ende (4C, 8A) gekuppelt ist und von denen das zweite Keilwellenglied (8) mit den primären drehmomentübertragenden Mitteln (2) verbunden und mit dem jeweils anderen Ende (4C, 8A) gekuppelt ist, wobei die Leisten der beiden Keilwellenglieder (4, 8) zueinander ausgerichtet, jedoch außer Eingriff sind, so daß die redundanten drehmomentübertragendun Mittel (3) unwirksam sind, wenn die primären drehmomentübertragenden Mittel (2) wirksam sind, und wobei das erste Keilwellenglied (4) und das zweite Keilwellenglied (8) bei einem Ausfall der primären drehmomentübertragenden Mittel (2) so verschoben wird, daß die entsprechenden Leisten (6, 10) der beiden Keilwellenglieder (4, 8) in Eingriff treten und die redundanten drehmomentübertragenden Mittel (3) wirksam werden, dadurch gekennzeichnet, daß die Kupplung ferner einen Fehlerdektor aufweist, der einerseits aufweist: einen Wandlerkreis (18), der den redundanten drehmomentübertragenden Mitteln (3) elektrisch zugeordnet ist und mindestens eine stationäre Wicklung (20), Mittel (24) zum Erregen der stationären Wicklung (20) und mindestens eine umlaufende Wicklung (22) aufweist, die mit der stationären Wicklung (20) induktiv gekoppelt ist und mit dem Antriebsmitteln umläuft, wobei die redundanten drehmomentübertragenden Mittel (3), wenn sie bei Ausfall der primären drehmomentübertragenden Mittel (2) in Funktion treten, der Wandlerkreis (18) so beeinflussen, daß die umlaufende Wicklung (22) kurzgeschlossen wird, und der ferner auf der anderen Seite mit dem Wandlerkreis (18) verbundene Mittel (30) aufweist, die den Kurzschluß abfühlen, was einen Ausfall der primären drehmomentübertragenden Mittel (2) anzeigt.

2. Antriebswellenkupplung nach Anspruch 1, dadurch gekennzeichnet, daß das erste Keilwellenglied (4) einen ersten drehmomentübertragenden Hauptabschnitt (4A) und einen relativ dünnen zweiten Abschnitt (4b), der am ersten Abschnitt befestigt ist, aufweist, daß ein Isolierglied (12) den ersten und den zweiten Abschnitt (4A, 4B) voneinander trennt, so daß ein elektrischer Kreis durch das erste Keilwellenglied (4) und das zweite Keilwellenglied (8) geöffnet ist, wenn die redundanten drehmomentübertragenden Mittel (3) unwirksam sind, wobei der elektrische Kreis durch ein Eingriff der entsprechenden Leisten (6, 10) der beiden Keilwellenglieder (4, 8) geschlossen wird, wenn die drehmomentübertragenden Mittel (3) bei Ausfall der primären drehmomentübertragenden Mittel (2) wirksam werden.

3. Antriebswellenkupplung nach Anspruch 1 und 2, dadurch gekennzeichnet, daß das Schließen des elektrischen Kreises durch den Eingriff der entsprechenden Leisten (6, 8) der beiden Keilwellenglieder (4, 8) die umlaufende Wicklung (22) kurzschließt, wodurch die Impedanz der stationären Wicklung (20) verringert wird, und daß die Mittel (30) zum Abfühlen des Kurzschlusses die verringerte Impedanz der stationären Wicklung (20) abfühlen.

4. Antriebswellenkupplung nach Anspruch 1 und 2, dadurch gekennzeichnet, daß eine erste und eine zweite stationäre Wicklung (42, 48) und eine erste und eine zweite umlaufende Wicklung (40, 46) vorgesehen sind, daß die erste umlaufende Wicklung (40) mit der ersten stationären Wicklung (42) induktiv gekoppelt ist und die zweite umlaufende Wicklung (46) mit der zweiten stationären Wicklung (48) induktiv gekoppelt ist, daß die erste und die zweite umlaufende Wicklung (40, 46) parallel geschaltet sind, daß die erste stationäre Wicklung (42) durch die Erregermittel (24) erregt wird, worauf ein Signal in der ersten umlaufenden Wicklung (40) induziert wird, und die zweite umlaufende Wicklung (46) durch das in der ersten umlaufenden Wicklung (40) induzierte Signal erregt wird, worauf ein Signal in der zweiten stationären Wicklung (48) induziert wird, daß des Schließen des elektrischen Kreises durch Eingriff der entsprechenden Leisten (6, 10) der beiden Keilwellenglieder (6, 8) die erste und die zweite umlaufende Wicklung (40, 46) kurzschließt, was ein Fehlen des in der zweiten stationären Wicklung (48) induzierten Signales zur Folge hat, so daß die Mittel (30) zum Abfühlen des Kurzschlusses die Abwesenheit dieses Signales erfassen.

5. Antriebswellenkupplung nach Anspruch 4, dadurch gekennzeichnet, daß Schaltmittel (44) vorgesehen sind, die die Erregermittel (24) mit der ersten stationären Wicklung (42) verbinden, wobei die Schaltmittel (44) manuell betätigbar sind, um die erste stationäre Wicklung (42) zum Prüfen des Wandlerkreises (18) von den Erregermitteln (24) abzutrennen.

6. Antriebswellenkupplung nach Anspruch 3, dadurch gekennzeichnet, daß die mit dem Wanderkreis (18) verbundenen Mittel (30) zum Fühlen des Kurzschlusses eine Anzeigevorrichtung (30) umfassen, die zwischen die stationäre Wicklung (20) und die Erregerwicklung (24) geschaltet ist und in Abhängigkeit von der verringerten Impedanz der stationären Wicklung (20) eine Fehleranzeige liefert.

7. Antriebswellenkupplung nach Anspruch 4, dadurch gekennzeichnet, daß die mit dem Wandlerkreis (18) verbundenen Mittel (30) zum

11

0 026 681

12

Abfühlen des Kurzschlusses eine Anzeigevorrichtung (30) umfassen, die an der zweiten stationären Wicklung (48) anliegt, um zur Abgabe einer Fehleranzeige das Fehlen des in ihr normalerweise induzierten Signales zu erfassen.

FIG. 1

FIG. 2

FIG. 3

FIG. 4